# EUROPEAN PATENT SPECIFICATION

(11) **EP 4 282 022 B1**
(45) Date of publication and mention of the grant of the patent: **05.03.2025**
(21) Application number: 22704625.7
(22) Date of filing: 21.01.2022
(51) Int. Cl.: H01M 10/613, H01M 10/625, H01M 10/653, H01M 10/6551, H01M 10/6554, H01M 10/6556, H01M 50/209, H01M 50/249, H01M 50/289, H01M 50/519

(54) **BATTERY HOUSING AND BATTERY MODULE INCLUDING THE BATTERY HOUSING**
BATTERIEGEHÄUSE UND BATTERIEMODUL MIT DEM BATTERIEGEHÄUSE
BOÎTIER DE BATTERIE ET MODULE DE BATTERIE COMPRENANT LE BOÎTIER DE BATTERIE

(30) Priority: 22.01.2021 US 202163140384 P
(43) Date of publication of application: 29.11.2023
(73) Proprietor: CPS Technology Holdings LLC, New York, New York 10281 (US); Clarios Advanced Solutions GmbH, 30419 Hannover (DE)
(72) Inventor: LEE, Eric, Kar Wai, Antioch, IL 60002 (US); ELISON, Nicholas, E., Mequon, WI 53092 (US); BIRKHOLZ, Joerg, 31157 Sarstedt (DE); JANSEN, Marco, 29229 Gross Hehlen (DE); REESMAN, Jack, Gilmond, Oconomowoc, WI 53066 (US)
(74) Representative: Meissner Bolte Partnerschaft mbB
(86) International application number: PCT/US2022/013386
(87) International publication number: WO 2022/159749

(56) References cited:
- WO-A1-2020/214948

## Description

### BACKGROUND

The disclosure relates generally to the field of batteries and battery modules. More specifically, the disclosure relates to a housing for a battery or battery module.

A vehicle uses one or more battery systems. In particular, a vehicle (e.g., an electric vehicle, a hybrid vehicle) may use a lithium-ion (Li-ion) battery in place of or in addition to a more traditional lead-acid battery. As will be appreciated by those skilled in the art, hybrid electric vehicles (HEVs), also considered xEVs, combine an internal combustion engine propulsion system and a battery-powered electric propulsion system, such as 48 Volt (V) or 130V systems. In some electric vehicles, the lithium-ion battery supplies a majority of or all of the power used to propel the vehicle.

Many design aspects are considered when using a lithium-ion battery. For example, it may be beneficial for a lithium-ion battery to fit in a similar space as a lead-acid battery. Additional design considerations may include weight, crush-resistance, heat transfer from the lithium-ion cells to prevent overheating, materials cost, cost of manufacturing, and ease of manufacturing. WO 2020/214948 A1 relates to a battery housing for a battery module, comprising a plurality of exterior walls surrounding a base forming an internal section which is configured to receive one or more battery cells.

Many different manufacturing techniques can be used for assembling a battery housing. For example, a simple butt joint with alignment features (e.g., posts) may be used to couple a first housing portion to a second using portion. However, this method requires removal of excess adhesive from the outside of the joint and would increase manufacturing demands. Another method of coupling the housing components includes using an adhesive tape. However, adhesive tapes may not have sufficient bonding requirements for mechanical shocks, vibration, and temperature range over its life. Other manufacturing techniques are desired.

Additionally, a metal heat sink base may be coupled to the battery housing by overmolding the metal part with a plastic housing. This method relies on a strong chemical bond between the plastic and aluminum and, thus, requires additional expertise in bonding poly materials to metals. Additionally, this method of bonding may result in insufficient joint robustness at the plastic/aluminum joint. Other manufacturing techniques are also desired.

### SUMMARY

The invention is defined in the appended claims. A battery module is accordingly disclosed. Summaries of various aspects are set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below. The disclosure relates to batteries and battery modules. More specifically, the disclosure relates to lithium-ion battery cells that may be used in vehicles as well as other energy storage/expending applications.

The disclosure relates to a battery module including a housing having a first interior surface and a second interior surface opposite the first interior surface. The battery module also includes a battery cell assembly disposed within an interior space of the housing between the first and second interior surfaces. The housing also includes a base portion that functions as a heat sink to draw heat away from the cell assembly. The base portion can be a metal base or metal base plate. The base portion can be coupled to the plastic portion of the housing using an adhesive dispensed in a groove of the housing.

The disclosure also relates to a method for manufacturing a battery module. The method includes dispensing an adhesive in a groove on a perimeter of the bottom of the housing. Further, the method includes coupling the base portion to the housing using the dispensed adhesive.

The disclosure further discloses a battery housing having a frame portion with a first material and a first thermal conductivity, and a base coupled to the frame portion. The base includes a second material with a second thermal conductivity greater than the first thermal conductivity, thereby facilitating better heat transfer from battery cells to the base. The first material can include a polymeric material and the second material includes a metal. The second base can be in the form of a plate and/or include a cooling feature.

The disclosure also discloses a battery housing comprising an injection molded frame portion having a shelf comprising. Formed in the shelf can be a groove, a spillway, and a channel providing a pathway through the shelf from the groove to the spillway, thereby making the bonding operation between the base plate and the housing less messy. This may also limit or eliminate the need for a secondary manual cleaning process.

In some constructions, the groove includes a rectangular portion and an arcuate portion. Also in some constructions, the shelf further comprises, formed in the shelf a plurality of spillways, and a plurality of channels.

### BRIEF DESCRIPTION OF THE DRAWINGS

Various examples of embodiments of the systems, devices, and methods according to the invention will be described in detail, with reference to the following figures.
FIG. 1 is a perspective view of a vehicle (e.g., an xEV) having a battery system contributing all or a portion of the power for the vehicle, in accordance with an embodiment of the present application.
FIG. 2 is a cutaway schematic view of the vehicle of FIG. 1, in the form of a hybrid electric vehicle (HEV) having a battery module.
FIG. 3 is an isometric view of an example battery module used in FIG. 2.
FIG. 4 is an alternative isometric view of the battery module of FIG. 3, and more specifically shows a base plate of the battery module.
FIG. 5 is an exploded view of the battery module of FIG. 3, illustrating one or more examples of arrangements of features which may be used to form the battery module.
FIG. 6 is an isometric view of a battery housing with the base plate attached for the battery module of FIG. 3.
FIG. 7 is an exploded view of a battery housing and the base plate of the battery module of FIG. 3.
FIG. 8 is a cross-sectional view of the battery housing with the base plate of FIGS. 6 and 7 attached and battery cells disposed in the housing.
FIG. 9 is a more detailed cross-sectional view depicting a groove in the housing of FIG. 8 in which the adhesive is dispensed to couple the base plate to the housing.
FIG. 10 is a more detailed view of the groove of FIG. 9 of the housing.

It should be understood that the drawings are not necessarily to scale. In certain instances, details that are not necessary to the understanding of the invention or render other details difficult to perceive may have been omitted. It should be understood, of course, that the invention is not necessarily limited to the particular embodiments illustrated herein.

### DETAILED DESCRIPTION OF THE DRAWINGS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The battery systems described herein may be used to provide power to various types of electric vehicles (e.g., xEVs) and other high voltage energy storage/expending applications (e.g., electrical grid power storage systems). Such battery systems may include one or more battery modules. Each battery module has housing and a number of battery cells (e.g., Lithium-ion (Li-ion) electrochemical cells) arranged within the housing to provide particular voltages and/or currents useful to power a load (e.g., one or more components of a vehicle). As another example, battery modules in accordance with present embodiments may be incorporated with or provide power to stationary power systems (e.g., non-vehicle systems).

Again, the battery modules configured in accordance with present embodiments may be employed in any number of energy expending systems (e.g., vehicular contexts and stationary power contexts). To facilitate discussion, constructions of the battery modules described herein are presented in the context of advanced battery modules (e.g., Li-ion battery modules) employed in vehicles (e.g., xEVs). As used herein, the terms "battery" and "battery module" may be interchangeable.

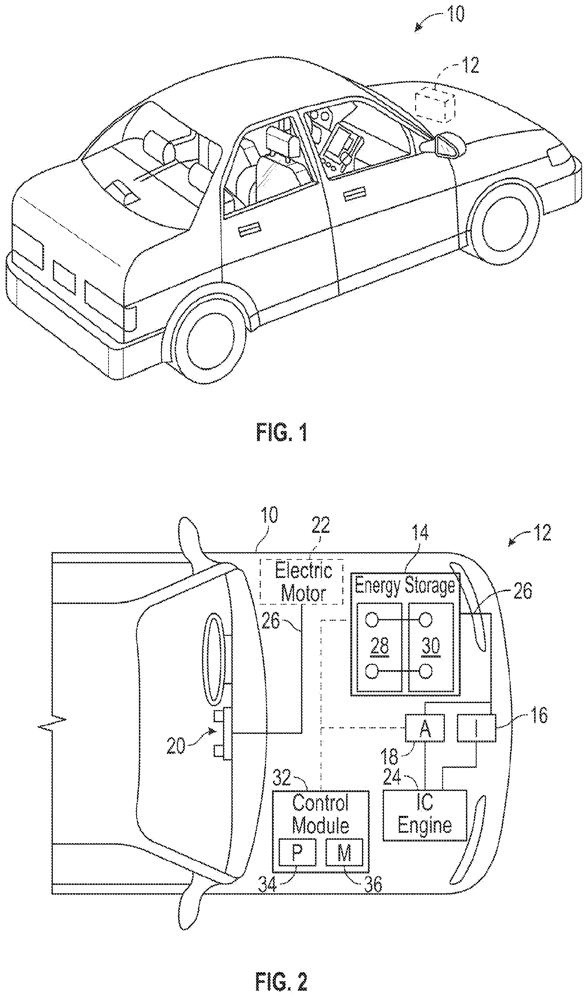

With the foregoing in mind, FIG. 1 is a perspective view of a vehicle 10 having a battery system 12. A more detailed view of an example battery system is described in FIG. 2. As depicted, the battery system 12 includes an energy storage component 14. The energy storage component is coupled to an ignition system 16, an alternator 18, a vehicle console 20, and optionally to an electric motor 22. Generally, the energy storage component 14 may capture/store electrical energy generated in the vehicle 10 and output electrical energy to power electrical devices in the vehicle 10.

The battery system 12 may supply power to components of the vehicle's electrical system. In the depicted construction, the energy storage component 14 supplies power to the vehicle console 20 and the ignition system 16, which may be used to start (e.g., crank) the internal combustion engine 24. The energy storage component 14 may capture electrical energy generated by the alternator 18 and/or the electric motor 22.

To facilitate capturing and supplying electric energy, the energy storage component 14 may be electrically coupled to the vehicle's electric system via a bus 26. For example, the bus 26 enables the energy storage component 14 to receive electrical energy generated by the alternator 18 and/or the electric motor 22. Additionally, the bus 26 may enable the energy storage component 14 to output electrical energy to the ignition system 16 and/or the vehicle console 20.

Additionally, as depicted, the energy storage component 14 includes multiple battery modules. For example, in the depicted embodiment, the energy storage component 14 includes a lithium-ion (e.g., a first) battery module 28 and a lead-acid (e.g., a second) battery module 30, which each includes one or more battery cells. In other constructions, the energy storage component 14 includes any number of battery modules. Additionally, although the lithium-ion battery module 28 and lead-acid battery module 30 are depicted adjacent to one another, they may be positioned in different areas around the vehicle 10. For example, the lead-acid battery module may be positioned in or about the interior of the vehicle 10 while the lithium-ion battery module 28 may be positioned under the hood of the vehicle 10. In some implementations, the energy storage component 14 includes multiple battery modules to utilize multiple different battery chemistries.

To facilitate controlling the capturing and storing of electrical energy, the battery system 12 additionally includes a control module 32. More specifically, the control module 32 may control operations of components in the battery system 12, such as relays (e.g., switches) within the energy storage component 14, the alternator 18, and/or the electric motor 22. The control module 32 may regulate the amount of electrical energy captured/supplied by each battery module 28 or 30 (e.g., to de-rate and re-rate the battery system 12), perform load balancing between the battery modules 28 and 30, determine a state of charge of each battery module 28 or 30, determine temperature of each battery module 28 or 30, control voltage output by the alternator 18 and/or the electric motor 22, and the like.

For the construction shown in FIG. 2, the control module 32 includes one or more processors 34 and one or more memories 36. More specifically, the one or more processors 34 may include one or more application-specific integrated circuits (ASICs), one or more field-programmable gate arrays (FPGAs), one or more general purpose processors, or any combination thereof. Additionally, the one or more memories 36 may include volatile memory, such as random-access memory (RAM), and/or non-volatile memory, such as read-only memory (ROM), optical drives, hard disc drives, or solid-state drives. In some embodiments, the control module 32 may include portions of a vehicle control unit (VCU) and/or a separate battery control module.

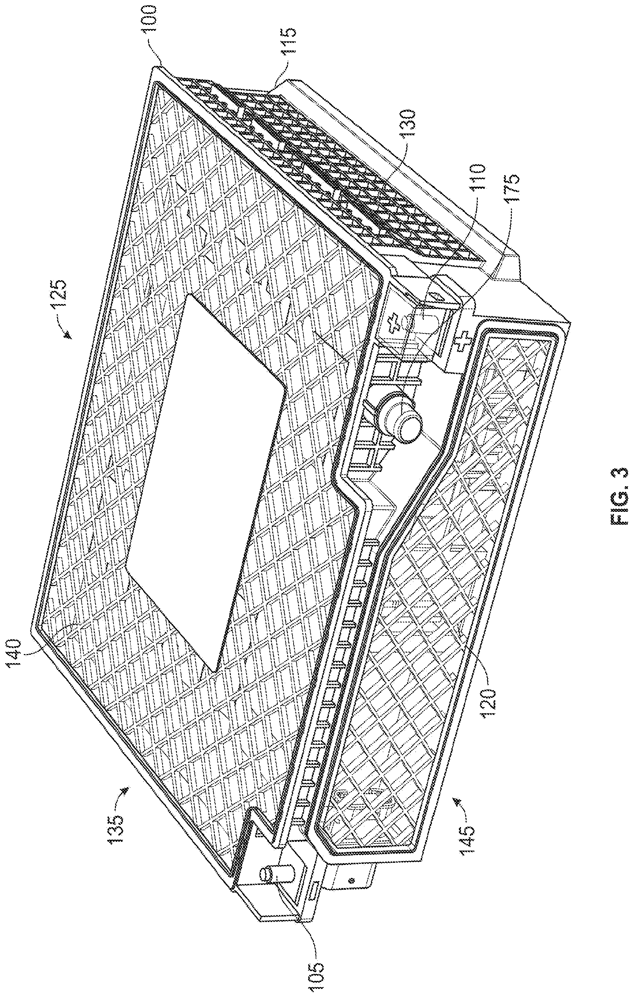

The lithium-ion battery module 28 may have any one of a variety of different shapes, sizes, output voltages, capacities, and so forth, and the present disclosure is generally intended to apply to different variations of the shapes and sizes of the modules illustrated in the figures. Keeping this in mind, FIG. 3 is a front top perspective view of one construction of a battery module 100, which can be the lithium-ion battery module 28.

The battery module 100 includes a first terminal 105 (e.g., a negative terminal) and a second terminal 110 (e.g., a positive terminal) that may be coupled to an electrical load (e.g., circuit). In other constructions, the battery module 100 has more than two terminals, to provide different voltages for different loads via connections across different terminal combinations.

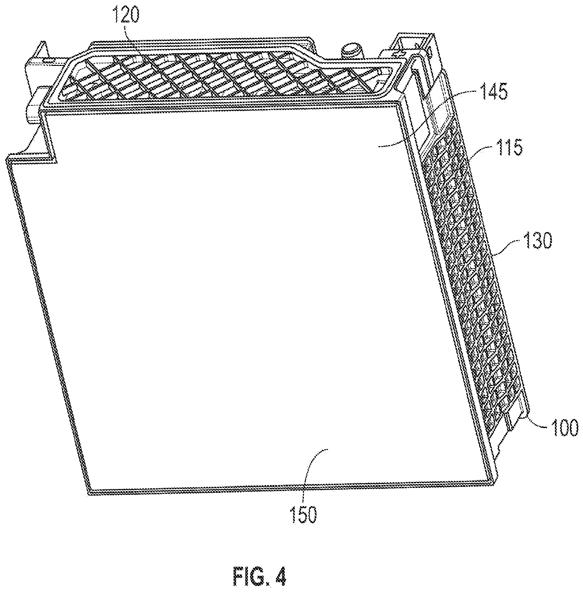

The battery module 100 includes a housing 115 for packaging or containing a plurality of battery cells and other components of the battery module 100. The housing 115 includes two end portions 120 and 125, two side portions 130 and 135, a top portion 140 (e.g., fitted with a top cover 141), and a bottom portion 145. FIG. 3 shows the top portion 140, one 120 of the two end portions, and one 130 of the two side portions. The housing 115 may be polymeric (e.g., polypropylene, acrylonitrile butadiene styrene (ABS), a polystyrene (PS), a polyimide (PI), or another suitable polymer or plastic or combination thereof), or other suitable housing material or combination of materials. Examples of combination of materials are discussed below, such as with FIG. 4.

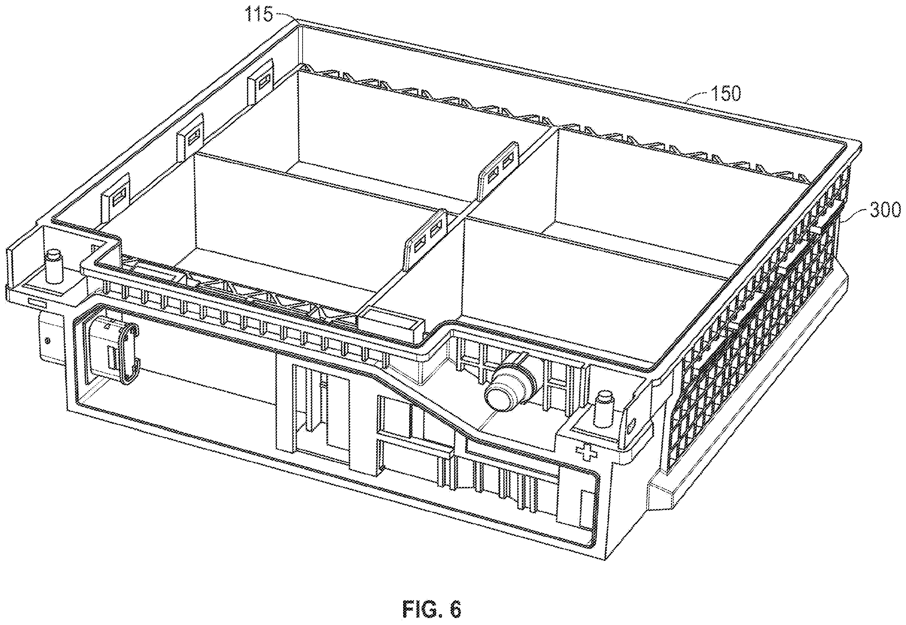

FIG. 4 is an alternative view of the example construction of the battery module 100 and depicts the bottom portion 145 of the battery module 100. In this example construction, the bottom portion 145 includes a base portion 150 (may also be referred to simply as a "base") made of metal (e.g., aluminum) rather than the same polymer or plastic material of the housing 115. The base portion 150 is shown as being a plate (may also be referred to as a "base plate"). The base portion functions as a heat sink or cooling plate to draw heat away from the plurality of battery cells disposed within the battery module. The base portion 150 is described in more detail in conjunction with FIGS. 6-8 below. While the shown base portion 150 is in the form of a plate, other shapes are envisioned for the base 150 including a base having cooling features (e.g., fins) for passive or active cooling.

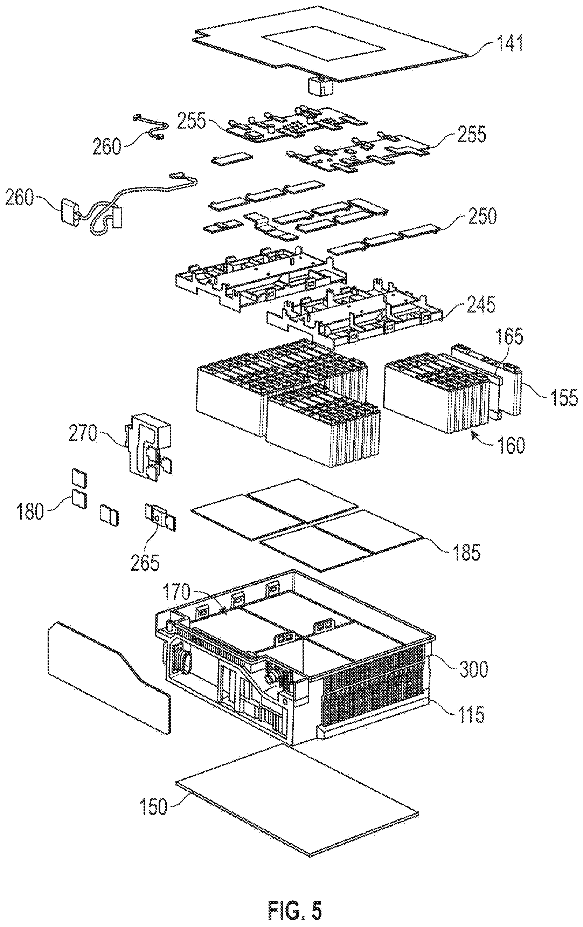

FIG. 5 illustrates an exploded perspective view of an example construction of the battery module 100 of FIGS. 3 and 4. The battery module 100 includes the housing 115 that is sized to facilitate, among other things, placement of a plurality of battery cells 155 in a desired manner. The battery module 100 may include a number of battery cells 155. The number of battery cells 155 can depend on the voltage and/or capacity requirements of the battery module 100, the individual voltage and capacity of each battery cell, and the manner in which the battery cells 155 are coupled. Accordingly, the number and/or arrangement of battery cells 155 may be variable from what is shown depending on the desired power of the battery module 100 and/or the desired dimensions (e.g., length, width, and/or height) of the battery module 100.

While any single type of battery cell may be utilized, the battery cells 155 used in the battery module 100 all have the same general shape (e.g., prismatic, cylindrical, pouch, or any other), the same electrochemistry (e.g., electrode active materials, electrolytes, additives), the same general dimensions (e.g., to within manufacturing tolerances), and other similar design features (e.g., electrical isolation). In the depicted construction, the battery module 100 includes a number of battery cells 155 sufficient to enable the battery module 100 to provide a 48V output, though the battery module 100 may output other voltages (e.g., 12 V) using different numbers and/or connections of battery cells 155. In shown construction, the battery cells 155 consist of four groups of six battery cells.

As shown in FIG. 5, the battery cells 155 are arranged in a cell stack 160. While four cell stacks 160 are shown, in other constructions, the battery cells 155 may be arranged in one, two, three, or more cell stacks. Further, the one or more cell stacks 160 may be oriented vertically (e.g., in a columnar arrangement with respect to cell terminals) or horizontally (e.g., in a row arrangement with respect to cell terminals).

A spacer 165 may be used between each battery cell of the cell stack 160 to separate the battery cells from one another. In various constructions, an insulating or electrically isolating material (e.g., an additional type of spacer) or film is disposed around the conductive surfaces of the battery cells 155. The cell isolation film may further require use of an adhesive.

The stacks 160 of battery cells 155 are inserted into an opening 170 of the housing 115. The housing 115 is large enough to accommodate the desired number of battery cells 155 and other components. In the depicted construction, the housing 115 is divided into four quadrants. While four quadrants are depicted, various alternative housing arrangements should be understood as within the scope of this disclosure. The housing 115 also includes vehicle connection components, such as, but not limited to, positive and negative terminals 110 and 105 and a communication connector 175 (Fig. 3). In various constructions, the terminals 105 and 110 may each be comprised of a bus bar 180 and a terminal post. As shown in FIG. 5, the cells are provided on top of the base plate using an adhesive such as a layer of epoxy 185. The layer of epoxy 185 reflects the four-quadrant division of the housing 115.

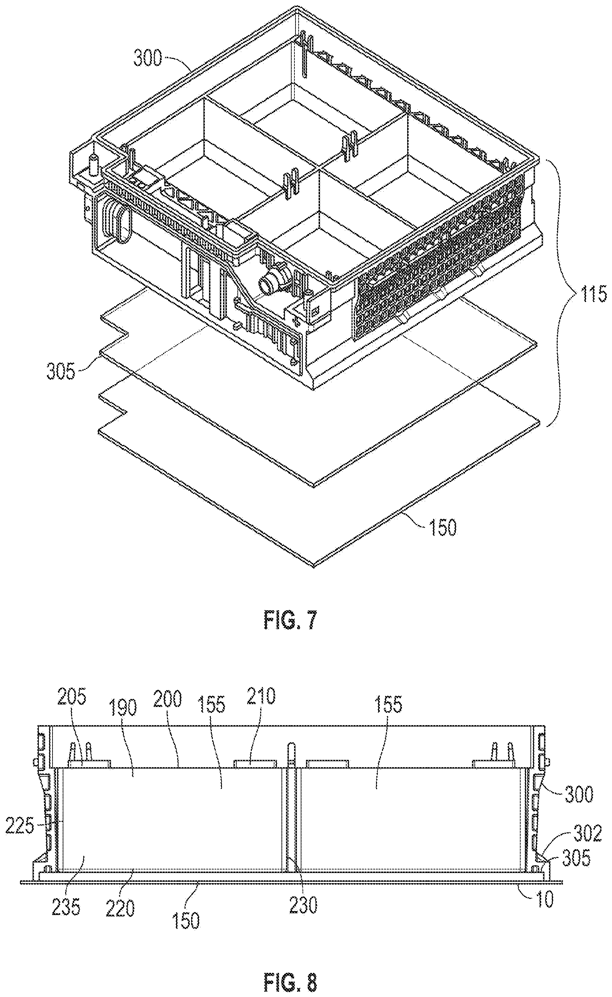

The battery cells 155 described herein are prismatic battery cells, where a prismatic battery cell, as defined herein, includes a prismatic case 190 (FIG. 8) that is generally rectangular in shape. In contrast to pouch cells, the prismatic casing is formed from a relatively inflexible, hard (e.g., metallic) material. However, it should be noted that certain constructions may incorporate pouch cells in addition to or in lieu of prismatic battery cells. In accordance with the shown constructions, each prismatic battery cell includes a prismatic cell casing 190. The casing 190 includes a top casing portion 200 where a set of cell terminals 205 and 210 (e.g., positive and negative cell terminals) are located. One or more cell vents are also located on the top casing portion 200. The cell casing 190 also includes a bottom casing portion 220 positioned opposite the top casing portion 200. Sides 225 and 230 may be straight or rounded, and extend between the top and bottom casing portions in respective positions corresponding to the cell terminals 205 and 210. First 235 and second faces, which may be flat (as shown) or rounded, couple the first and second sides at opposing ends of each cell.

As described above, the battery cell stacks are provided into the housing 115, as shown in FIG. 5, atop the layer of epoxy 185 as well as the metal base plate 150. Conductors are then provided atop the battery cells 155 in order to transmit the power out of the terminals 105 and 110. In the illustrated example, carriers 245 holding cell bus bars 250 are provided to the cells 155. In some examples, the carriers 245 may hold electrical connection components as well as one or more control boards 255. These electrical connection components may include, but are not limited to, a flexible printed circuit (FPC) for facilitating the electrical connections, a battery management unit (BMU), wire harnesses 260, the one or more bus bars 250, shunts, fuses 265, relays 270, vehicle connector plugs, terminals, and/or covers.

FIG. 6 depicts an example construction of the housing 115 with the base plate 150 attached. FIG. 7 is a more detailed exploded view of the housing 115 and base plate 150 than that of FIG. 5. As shown in FIGS. 6 and 7, the example construction of the base portion (e.g., the base plate 150) has a perimeter shape corresponding to the bottom portion 145 of the housing 115. The shown housing 115 has a hybrid construction including an injection molded plastic part (e.g., a frame portion or simply frame 300) and the base plate 150 (e.g., an aluminum sheet). The base plate 150 is coupled to the frame 300 using an adhesive 305. The adhesive 305 is dispensed along a perimeter of the frame 300. Alternatively, the adhesive 305 may be dispensed along a perimeter of the base plate 150.

The construction of the housing 115 for the example battery module 100 differs from typical battery housings that have an integral bottom and a top that is sealed off with a similar material cover. In the example construction of the figures, an integral bottom is not included when the frame 300 is injection molded. Instead, an injection molded frame 300 that has the appearance of a "picture frame" is manufactured when it is produced by an injection molding tool. That is, a perimeter of the bottom 302 (FIG. 8) of the plastic portion of the frame 300 is formed with picture-like edge in which the base plate 150 will later be positioned.

The adhesive 305 is dispensed into a groove 310 formed in an edge 315 (or shelf) and extending around the perimeter of the bottom 302 of the frame 300. The base plate 150 is then placed onto the bottom 302 of the frame 300 of the housing 115. The edge 315 acts as a shelf to receive the base plate 150. When the adhesive 305 cures, the base plate 150 is bonded to the housing 115. In some alternative example constructions, the base plate 150 may be coupled to the frame 300 of the housing 115 using a suitable mechanical fastener(s) (e.g., screw, bolt, clamp, etc.) and a sealing ring. However, using mechanical fasteners is typically perceived as less desirable than using other fastening methods because mechanical fasteners can puncture the cells 155 in a crush event.

In this example construction, the shape of the base plate 150 is substantially rectangular or square. The example base plate 150 also has a small cutout in one corner. The base plate 150 is sized to fit completely within the perimeter of the bottom 302 of the frame 300. In other example constructions, the base portion 150 may be any size and shape that corresponds with the perimeter. The base plate 150 in this example construction is an aluminum sheet. Alternatively, other metals or thermally conductive materials, even including other polymeric materials, may be used for the base plate 150. The base plate 150 acts as a heat sink (i.e., the path-of-least-resistance for heat in the battery pack to leave the system) to draw heat away from the plurality of battery cells disposed within the battery module. The base portion 150 is envisioned as having other designs distinct from a plate. For example the base can include cooling features (e.g., fins) for passive or active cooling.

FIG. 8 is a cross-sectional view of the housing 115 with the base plate 150 attached and battery cells 155 disposed in the housing 115. As shown in FIG. 8, the base plate 150 is attached to the housing 115 inside a wall 320 of the shelf 315. A bottom surface 325 (e.g., exterior surface, exterior side) of the base plate 150 is completely exposed and not covered in any way by the plastic housing. On a top surface 330 (e.g., interior surface, interior side) of the base plate 150, the battery cells 155 are coupled to the base plate 150 and held in place with an adhesive (e.g., epoxy 185). Other than the epoxy 185, no intervening components are positioned between the base plate 150 and the battery cells 155 for the shown construction. This construction facilitates better heat transfer from the battery cells 155 to the base plate 150. Additionally, the example construction is an improvement over prior constructions that may imbed a metal plate in a plastic base of a housing because including only the metal plate 150 improves thermal conductivity between the battery cells 155 and the chassis of the vehicle 10. The example construction is also lighter and more cost effective than using an aluminum die cast housing. Thus, the hybrid housing construction described herein balances improved thermal conduction of using the metal base plate 150 with a cost and weight savings of a plastic for the remainder of the housing.

In one construction, the battery cells 155 are bonded on the interior side 330 of the base plate 150 and the exterior side 325 is to be in contact with the metal chassis of the vehicle 10 when the battery module 100 is installed or positioned within the vehicle 10. Accordingly, the base plate 150 will draw excess heat from the battery cells 155 and transfer heat to the chassis of the vehicle 10 via conductive heat transfer. The heat will further dissipate from the chassis via convective heat transfer.

In addition to providing improved heat transfer from the battery cells 155, using an aluminum or other metal sheet as the base plate 150 for the housing 115 can improve mechanical robustness of the battery module 100. The example construction including the metal base plate 150 improves crush resistance over a construction using a completely plastic housing. Crush resistance is improved in five of the six directions from which crush forces may act on the battery. As a result, a need for an additional cover for the battery is eliminated, thus saving additional cost, time, weight, and space within the vehicle 10. The complexity of manufacturing the battery module 100 is also reduced by not needing and additional cover for the battery.

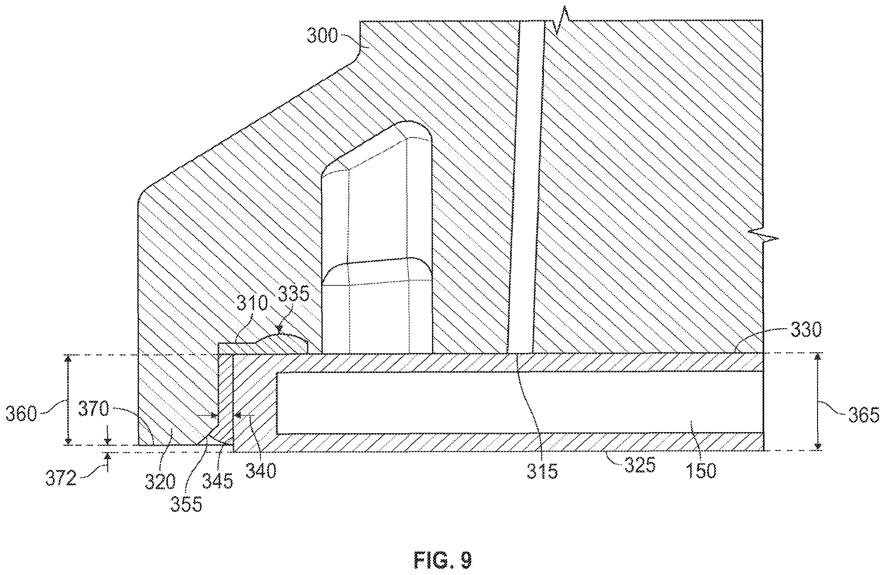

FIG. 9 is a more detailed cross-sectional view depicting the groove 310 in which the adhesive 305 is placed to couple the base plate 150 to the frame 300 of the housing 115. The groove 310 is included around a perimeter of the frame 300 of the housing 115. The groove 310 includes a semi-circle or arcuate profile 335 and is molded into the shelf 315 of the molded frame 300 of the housing 115 (i.e., during the injection molding process of the housing). The groove 310 also has a minimum depth, which can be dictated at least in part by the specified strength of the adhesive 305 being dispensed in the groove 310. The adhesive 305 may be dispensed using a nozzle. The size of the nozzle dispensing the adhesive 305 can correspond with the width of the groove 310 or the arcuate profile 335 in which the adhesive 305 is being dispensed. While different nozzle sizes may be used, using a nozzle that is too small for the groove 310 may result in too little adhesive being dispensed. If too little adhesive is dispensed, the seal may be insufficient. Alternatively, using a nozzle that is too large may result in too much excess product being dispensed, which affects manufacturing since the excess product needs to be removed.

The example construction includes a small gap 340 adjacent to the groove 310 and between an edge 345 of the base plate 150 and the perimeter wall 320 of the housing 115. The small gap 340 accommodates manufacturing tolerances of the base plate 150 and/or the housing 115 so that the base plate 150 will fit fully within the frame portion 300 of the housing 115 without interference. At the opening of the gap 340, a lead-in chamfer 355 can be included to aid assembly of the base plate 150 and the housing 115. The height 360 of the wall 320 and thickness 365 of the base plate 150 is such that the base plate 150 is always in contact with the vehicle chassis. In other words, a maximum wall height 360 will be less than a minimum base plate thickness 365 based on typical manufacturing tolerances. Thus, the base plate 150 protrudes out from the edge 370 of the frame portion 300 of the housing 115 by a distance 372 to ensure that the plate 150 has primary contact with the vehicle 10 rather than the housing 115.

Any air gap between the chassis of the vehicle 10 and the base plate 150 may impart more thermal resistance. Thus, the base plate 150 is, preferably, as close contact with the vehicle chassis as possible to transfer heat through conduction.

The example battery module 100 allows for many possible modular configurations of the base 150. For example, different types of plates may be used in place of the example base plate 150 (e.g., different metal plates, different thermally conductive plates). Additionally or alternatively, for more demanding performance, an active cooler or cooling plate (e.g., a cooler using liquid or forced air) may be included in the housing 115 attached to or in place of the base plate 150.

The adhesive 305 is dispensed in excess (about 50% more than necessary) to ensure the groove 310 is completely filled. Dispensing excess adhesive ensures there is sufficient adhesive to support the joint between the housing 115 and the base plate 150. An insufficient amount of adhesive may lead to a weak spot in the joint. A weak spot makes the joint more susceptible to mechanical shock and vibration. A weak spot may also create a potential for a fluid leak path in the housing assembly. The battery module 100 should meet a certain level of water and air leak tightness to reduce hazards. Using excess adhesive mitigates the risk of potential leak paths forming in the housing assembly.

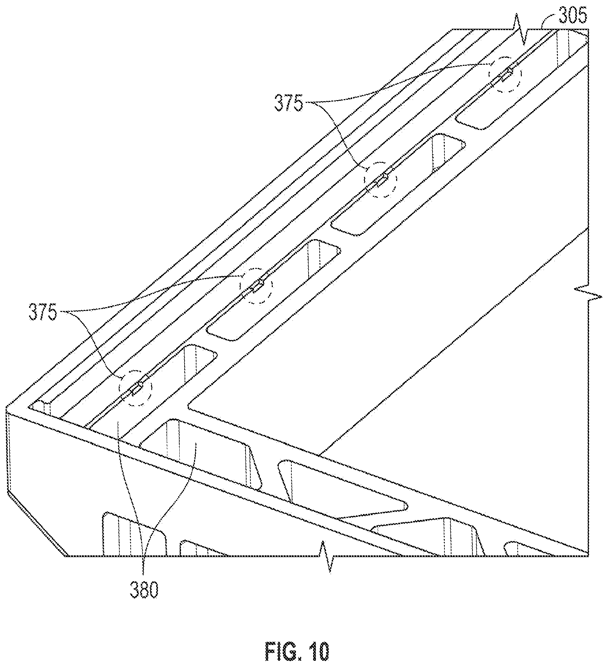

The example construction of the frame 300 is also formed with a plurality of small channels 375 adjacent to and intersecting the groove 310. The small channels 375 are formed in the shelf 315. The small channels 375 direct or channel overspill adhesive from the groove 310 to voids 380 (e.g., spillway void) also formed in the shelf. The adhesive flows when the base plate 150 is pressed onto the frame 300. A detailed view of the channels 375 is shown in FIG. 10. The channels 375 are equally spaced and provide paths between the groove 310 and the voids 380. The voids 380 collect the spillover adhesive so that the adhesive 305 does not disperse in an uncontrolled manner out through the gap 340 before the adhesive 305 cures. Thus, the inclusion of the channels 375 and the voids 380 collect the spillover adhesive and makes the bonding operation between the base plate and the housing less messy, thereby eliminating the need for a secondary manual cleaning process. The inclusion of the channels 375 and the voids 380 may also prevent or reduce the likelihood that the spillover adhesive affects primary contact of the heat sink with the vehicle 10. The voids is a substantial size to accommodate any excess adhesive applied.

Other methods of coupling the base plate 150 to the housing 115 may instead be used. For example, a simple butt joint with alignment features (e.g., posts) may be used to couple the plastic housing and the aluminum base plate. However, this method requires removal of excess adhesive from the outside of the joint and would increase manufacturing demands. Another method of coupling the base plate to the housing includes using an adhesive tape. However, adhesive tapes may not have sufficient bonding meet the requirements on for mechanical shocks, vibration, and temperature range over its life. Thus, the example construction using dispensed adhesive 305 has benefits over other methods of coupling the base plate 150 to the housing 115.

Alternatively, the base plate may be coupled to the housing by overmolding the aluminum sheet into the bottom of the plastic part. This method relies on a strong chemical bond between the plastic and aluminum and, thus, requires additional expertise in bonding plastics to metals. Additionally, this method of bonding may result in insufficient joint robustness at the plastic/aluminum joint.

The technical effects and technical problems in the specification are exemplary and are not limiting. It should be noted that the embodiments described in the specification may have other technical effects and can solve other technical problems.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that references to relative positions (e.g., "top," "bottom," "side," "front," and "back") in this description are merely used to identify various elements as are oriented in the Figures. It should be recognized that the orientation of particular components may vary greatly depending on the application in which they are used.

For the purpose of this disclosure, the term "coupled" means the joining of two members directly or indirectly to one another. Such joining may be stationary in nature or moveable in nature. Such joining may be achieved with the two members or the two members and any additional intermediate members being integrally formed as a single unitary body with one another or with the two members or the two members and any additional intermediate members being attached to one another. Such joining may be permanent in nature or may be removable or releasable in nature.

It is also important to note that the construction and arrangement of the system, methods, and devices as shown in the various examples of embodiments is illustrative only, and not limiting. Although only a few embodiments have been described in detail in this disclosure, those skilled in the art who review this disclosure will readily appreciate that many various alternatives, modifications, variations, improvements and/or substantial equivalents, whether known or that are or may be presently foreseen, are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements show as multiple parts may be integrally formed, the operation of the interfaces may be reversed or otherwise varied, the length or width of the structures and/or members or connector or other elements of the system may be varied, the nature or number of adjustment positions provided between the elements may be varied (e.g. by variations in the number of engagement slots or size of the engagement slots or type of engagement). The order or sequence of any process or method steps may be varied or re-sequenced according to alternative embodiments. "d?er

## Claims

1. A battery housing (115) comprising:
- two end portions (120, 125), two side portions (130, 135), a top portion (140), and a bottom portion (145);
- a frame portion (300) having a first material with a first thermal conductivity; and
- a metal base (150) coupled to the frame portion (300), the metal base (150) having a second thermal conductivity greater than the first thermal conductivity,
wherein the metal base (150) is attached to the bottom portion (145) of the battery housing (115).

2. The battery housing (115) of claim 1,
wherein the first material includes a polymeric material.

3. The battery housing (115) of claim 1 or 2,
wherein the metal base (150) includes a flat plate.

4. The battery housing (115) of one of claims 1 to 3,
wherein the metal base (150) includes a cooling feature.

5. The battery housing (115) of one of claims 1 to 4 and further comprising
an epoxy cured to the frame portion (300) and the base portion (150).

6. The battery housing (115) of claim 5,
wherein the metal base (150) includes a groove (310), and wherein the epoxy is disposed in the groove (310).

7. The battery housing (115) of claim 6,
wherein the frame portion (300) includes a shelf (315), wherein the base portion (150) abuts the shelf (315).

8. The battery housing (115) of claim 7,
wherein the frame portion (300) further includes a groove (310) formed in the shelf (315).

9. The battery housing (115) of claim 7 or 8,
wherein the frame portion (300) further includes a wall (320) formed with the shelf (315) and extending away from the shelf (315).

10. The battery housing (115) of claim 9,
wherein a gap is disposed between the base portion (150) and the wall (320); and/or
wherein the wall (320) includes a chamfer (355).

11. The battery housing (115) of one of claims 7 to 10,
wherein the frame portion (300) further includes a plurality of voids (380) formed in the shelf (315).

12. The battery housing (115) of claim 11,
wherein the frame portion (300) further includes a plurality of channels (375) formed in the shelf (315), the plurality of channels (375) providing a pathway through the shelf (315) from the groove (310) to the plurality of voids (380).

13. The battery housing (115) of one of claims 1 to 12,
further comprising a top cover (141) having the second material, the top cover (141) coupled to the frame (300).

14. A battery module (100) comprising:
- the battery housing (115) of one of claims 1 to 13;
- a plurality of battery cells (155) housed by the housing (115);
- an adhesive (305) coupled to the plurality of battery cells (155) and to the base portion (150), the adhesive (305) to thermally couple the plurality of battery cells (155) and the base portion (150); and
- optional a plurality of battery cells (155) coupled to the base portion (150), wherein the base portion (150) includes a heat sink to transfer heat from the battery cells (155).

## Patentansprüche

1. Batteriegehäuse (115), Folgendes umfassend:
- zwei Endabschnitte (120, 125), zwei Seitenabschnitte (130, 135), einen oberen Abschnitt (140) und einen unteren Abschnitt (145);
- einen Rahmenabschnitt (300), der ein erstes Material mit einem ersten Wärmeleitvermögen aufweist; und
- eine Metallbasis (150), die mit dem Rahmenabschnitt (300) gekoppelt ist, wobei die Metallbasis (150) ein zweites Wärmeleitvermögen aufweist, das größer als das erste Wärmeleitvermögen ist,
wobei die Metallbasis (150) an dem unteren Abschnitt (145) des Batteriegehäuses (115) angebracht ist.

2. Batteriegehäuses (115) nach Anspruch 1,
wobei das erste Material ein Polymermaterial beinhaltet.

3. Batteriegehäuses (115) nach Anspruch 1 oder 2,
wobei die Metallbasis (150) eine ebene Platte beinhaltet.

4. Batteriegehäuses (115) nach einem der Ansprüche 1 bis 3,
wobei die Metallbasis (150) ein Kühlungsmerkmal beinhaltet.

5. Batteriegehäuses (115) nach einem der Ansprüche 1 bis 4 und ferner ein Epoxidharz umfassend, das an den Rahmenabschnitt (300) und den Basisabschnitt (150) gehärtet ist.

6. Batteriegehäuses (115) nach Anspruch 5,
wobei die Metallbasis (150) eine Rille (310) beinhaltet und wobei das Epoxidharz in der Rille (310) angeordnet ist.

7. Batteriegehäuses (115) nach Anspruch 6,
wobei der Rahmenabschnitt (300) ein Fach (315) beinhaltet, wobei der Basisabschnitt (150) an das Fach (315) anstößt.

8. Batteriegehäuses (115) nach Anspruch 7,
wobei der Rahmenabschnitt (300) ferner eine Rille (310) beinhaltet, die in dem Fach (315) gebildet ist.

9. Batteriegehäuses (115) nach Anspruch 7 oder 8,
wobei der Rahmenabschnitt (300) ferner eine Wand (320) beinhaltet, die mit dem Fach (315) gebildet ist und sich von dem Fach (315) weg erstreckt.

10. Batteriegehäuses (115) nach Anspruch 9,
wobei zwischen dem Basisabschnitt (150) und der Wand (320) ein Spalt angeordnet ist und/oder
wobei die Wand (320) eine Fase (355) beinhaltet.

11. Batteriegehäuses (115) nach einem der Ansprüche 7 bis 10,
wobei der Rahmenabschnitt (300) ferner mehrere Hohlräume (380) beinhaltet, die in dem Fach (315) gebildet sind.

12. Batteriegehäuses (115) nach Anspruch 11,
wobei der Rahmenabschnitt (300) ferner mehrere Kanäle (375) beinhaltet, die in dem Fach (315) gebildet sind, wobei die mehreren Kanäle (375) einen Weg durch das Fach (315) von der Rille (310) zu den mehreren Hohlräumen (380) bereitstellen.

13. Batteriegehäuses (115) nach einem der Ansprüche 1 bis 12,
ferner eine oberer Abdeckung (141) umfassend, die das zweite Material aufweist, wobei die obere Abdeckung (141) mit dem Rahmen (300) gekoppelt ist.

14. Batteriemodul (100), Folgendes umfassend:
- das Batteriegehäuses (115) nach einem der Ansprüche 1 bis 13;
- mehrere Batteriezellen (155), die in dem Gehäuse (115) untergebracht sind;
- einen Haftstoff (305), der mit den mehreren Batteriezellen (155) und mit dem Basisabschnitt (150) gekoppelt ist, wobei der Haftstoff (305) zum thermischen Koppeln der mehreren Batteriezellen (155) und des Basisabschnitts (150) vorgesehen ist; und
- optional mehrere Batteriezellen (155), die mit dem Basisabschnitt (150) gekoppelt sind, wobei der Basisabschnitt (150) einen Kühlkörper beinhaltet, um Wärme von den Batteriezellen (155) abzuleiten.

## Revendications

1. Boîtier de batterie (115) comprenant :
- deux parties d'extrémité (120, 125), deux parties latérales (130, 135), une partie supérieure (140), et une partie inférieure (145) ;
- une partie de cadre (300) ayant un premier matériau avec une première conductivité thermique ; et
- une base métallique (150) couplée à la partie de cadre (300), la base métallique (150) ayant une seconde conductivité thermique supérieure à la première conductivité thermique,
dans lequel la base métallique (150) est fixée à la partie inférieure (145) du boîtier de batterie (115).

2. Boîtier de batterie (115) selon la revendication 1,
dans lequel le premier matériau inclut un matériau polymère.

3. Boîtier de batterie (115) selon la revendication 1 ou 2,
dans lequel la base métallique (150) inclut une plaque plate.

4. Boîtier de batterie (115) selon l'une des revendications 1 à 3,
dans lequel la base métallique (150) inclut un élément de refroidissement.

5. Boîtier de batterie (115) selon l'une des revendications 1 à 4 et comprenant en outre un époxy durci sur la partie de cadre (300) et la partie de base (150).

6. Boîtier de batterie (115) selon la revendication 5,
dans lequel la base métallique (150) inclut une rainure (310), et dans lequel l'époxy est disposé dans la rainure (310).

7. Boîtier de batterie (115) selon la revendication 6,
dans lequel la partie de cadre (300) inclut une étagère (315), dans lequel la partie de base (150) vient en butée contre l'étagère (315).

8. Boîtier de batterie (115) selon la revendication 7,
dans lequel la partie de cadre (300) inclut en outre une rainure (310) formée dans l'étagère (315).

9. Boîtier de batterie (115) selon la revendication 7 ou 8,
dans lequel la partie de cadre (300) inclut en outre une paroi (320) formée avec l'étagère (315) et s'étendant à l'écart de l'étagère (315).

10. Boîtier de batterie (115) selon la revendication 9,
dans lequel un espace est disposé entre la partie de base (150) et la paroi (320) ; et/ou
dans lequel la paroi (320) inclut un chanfrein (355).

11. Boîtier de batterie (115) selon l'une des revendications 7 à 10,
dans lequel la partie de cadre (300) inclut en outre une pluralité de vides (380) formés dans l'étagère (315).

12. Boîtier de batterie (115) selon la revendication 11,
dans lequel la partie de cadre (300) inclut en outre une pluralité de canaux (375) formés dans l'étagère (315), la pluralité de canaux (375) fournissant un trajet à travers l'étagère (315) de la rainure (310) à la pluralité de vides (380).

13. Boîtier de batterie (115) selon l'une des revendications 1 à 12, comprenant en outre un cache supérieur (141) ayant le second matériau, le cache supérieur (141) étant couplé au cadre (300).

14. Module de batterie (100), comprenant :
- le boîtier de batterie (115) selon l'une des revendications 1 à 13 ;
- une pluralité de cellules de batterie (155) abritées par le boîtier (115) ;
- un adhésif (305) couplé à la pluralité de cellules de batterie (155) et à la partie de base (150), l'adhésif (305) étant destiné à coupler thermiquement la pluralité de cellules de batterie (155) et la partie de base (150) ; et
- facultativement une pluralité de cellules de batterie (155) couplées à la partie de base (150), dans lequel la partie de base (150) inclut un puits thermique pour transférer de la chaleur à partir des cellules de batterie (155).
